# EUROPÄISCHE PATENTSCHRIFT

(11) **EP 2 385 608 B1**
(45) Veröffentlichungstag und Bekanntmachung des Hinweises auf die Patenterteilung: **11.08.2021**
(21) Anmeldenummer: 11165168.3
(22) Anmeldetag: 06.05.2011
(51) Int. Cl.: H02J 7/34, A47C 20/04

(54) **Elektromotorischer Möbelantrieb mit einer Energieversorgungseinrichtung**
Electromotor for furniture with an energy supply device
Entraînement de meuble électro-motorisé doté d'un dispositif d'alimentation en énergie

(30) Priorität: 07.05.2010 DE 202010005406 U
(43) Veröffentlichungstag der Anmeldung: 09.11.2011
(73) Patentinhaber: DewertOkin Technology Group Co., Ltd., Jiaxing City, Zhejiang Province (CN)
(72) Erfinder: Hille, Armin, 33659 Bielefeld (DE)
(74) Vertreter: Dantz, Jan Henning

(56) Entgegenhaltungen:
- EP-A2- 0 393 280
- WO-A1-95/23450
- DE-U1- 20 113 125
- DE-U1-202008 006 878

## Beschreibung

Die Erfindung betrifft einen elektromotorischen Möbelantrieb mit einer Energieversorgungseinrichtung zum Verstellen von beweglichen Möbelbauteilen relativ zueinander.

Derartige elektromotorische Möbelantriebe sind in unterschiedlichen Ausführungsformen bekannt. Sie sind als Linearantriebe mit einem linear verstellbaren Abtriebsglied oder als Rotationsantriebe mit einem rotierenden Abtriebsglied ausgebildet und haben sich in der Praxis bestens bewährt. Die Linearantriebe weisen einen oder eine Anzahl Elektromotore auf, wobei jedem Motor ein Drehzahlreduziergetriebe und einem weiteren dem Drehzahlreduziergetriebe nachgeschaltetem Getriebe beispielsweise in Form eines Gewindespindelgetriebes nachgeschaltet ist, welches aus der Drehbewegung des Motors eine Linearbewegung des Abtriebsgliedes erzeugt. Die Rotationsantriebe weisen wenigstens einem dem jeweiligen Elektromotor nachgeschaltetes Drehzahlreduziergetriebe auf, wobei das letzte Getriebeglied das Abtriebsglied bildet. Das Abtriebsglied des jeweiligen elektromotorischen Möbelantriebs steht mit einem festen und/oder mit einem beweglichen Möbelbauteil in Verbindung, so dass bei einem Betrieb des Elektromotors die beweglichen Möbelbauteile relativ zueinander verstellt werden. Dabei kann das Möbel als Lattenrost, Arbeitstisch, Bett, Liegefläche, Behandlungsliege, Krankenhaus- bzw. Pflegebett, sowie auch als eine Hubeinrichtung für Personen wie Lifter oder Patientenlifter ausgebildet sein.

Zum Betrieb der elektromotorischen Möbelantriebe haben sich Schaltnetzteile als Energieversorgungseinrichtung bestens bewährt. Die Energieversorgungseinrichtung weist unterschiedliche Betriebszustände auf, nämlich einen Betriebszustand Aus bei Trennung vom Netz, einen Betriebszustand Inbetriebnahme nach Anschluss an das Netz bis zum regulären Betrieb und einen Betriebszustand Betrieb im regulären Betrieb. Die Schaltnetzteile besitzen einen von einem Steuerbaustein mit hoher Frequenz geschalteten Trenntransformator, welcher auch als Übertrager oder als Hochfrequenztransformator bezeichnet werden kann, der durch einen vorgeschalteten Halbleiterschalter auf der Primärseite mit einer hohen Schaltfrequenz ein- und ausgeschaltet wird. Dazu ist dem Steuerbaustein ein gesonderter Zwischenstromkreis zugeordnet, welcher eine Energiequelle des Steuerbausteins aufweist und den Steuerbaustein mit einer elektrischen Energie versorgt. Ist die Energieversorgungseinrichtung nicht oder zumindest für eine Zeitdauer nicht mit dem Netz verbunden, so befindet sich die Energieversorgungseinrichtung im Betriebszustand Aus, wobei alle Energiespeicher wie beispielsweise Kondensatoren praktisch energielos sind. Wird die Energieversorgungseinrichtung mit dem Netz verbunden, so wechselt der Betriebszustand zunächst von dem Betriebszustand Aus in den Betriebszustand Inbetriebnahme. Die Energiequelle des Steuerbausteins ist mit einer Ladeschaltung verbunden und versorgt die Energiequelle im Betriebszustand der Inbetriebnahme mit elektrischer Energie. Eine derartige Energiequelle mit einer zugeordneten Ladeschaltung ist aus dem Stand der Technik bekannt und hat sich bestens bewährt.

Es hat sich jedoch gezeigt, dass sich im Betriebszustand der Inbetriebnahme die elektrische Energie der Energiequelle des Steuerbausteins nur allmählich aufbaut und die Energieversorgungseinrichtung erst nach einer gewissen Zeitspanne vom Betriebszustand Inbetriebnahme in den Betriebszustand des regulären Betriebs wechselt. Der Grund liegt in der Ladeschaltung, welche einfach im Aufbau und nur für den Wechsel des Betriebszustandes Aus in den Betriebszustand der Inbetriebnahme ausgelegt ist, und darüber hinaus für sehr kleine Ruheleistungsaufnahme konstruiert ist, was dazu führt, dass sich die Energiequelle des Steuerbausteins nur allmählich und entlang eines gewissen Zeitabschnittes mit elektrischer Energie füllt. Erst wenn das Potential der Energiequelle ein bestimmtes Maß erreicht hat, kann der Steuerbaustein arbeiten und die Energieversorgungseinrichtung in den Betriebszustand des regulären Betriebs versetzen. Wechselt der Betriebszustand in den regulären Betrieb, so erfolgt die Speisung der Energiequelle anderweitig, beispielsweise über eine Wicklung des Übertragers. Der Zeitabschnitt zwischen dem Betriebszustand der Inbetriebnahme und dem Betriebszustand des regulären Betriebs kann je nach Ausführung der als Schaltnetzteil ausgeführten Energieversorgungseinrichtung bis zu einigen Sekunden dauern, was vom Bediener als störend empfunden wird.

Das störende Empfinden tritt insbesondere dann auf, wenn der Energieversorgungseinrichtung eine Freischalteinrichtung vorgeschaltet ist, welche die Netzspannung der Energieversorgungseinrichtung abschaltet, wenn sich der elektromotorische Möbelantrieb im Ruhezustand befindet und nicht gebraucht wird. Betätigt nun der Bediener einen Tastschalter der Handbedienung, um das verstellbare Möbel mittels des daran angeschlossenen elektromotorischen Möbelantriebs zu verstellen, so schaltet die Freischalteinrichtung die eingangsseitige Netzspannung auf die Energieversorgungseinrichtung, so dass dessen Betriebszustand vom Betriebszustand Aus in den Betriebszustand Inbetriebnahme wechselt, im Anschluss dessen der eingangs erläuterte Zeitabschnitt durchlaufen wird, bis dass der Betriebszustand in den regulären Betrieb wechselt.

Es sei noch der Stand der Technik der Freischalteinrichtung näher erläutert, wobei die Freischalteinrichtung wenigstens einen netzseitig gesteuerten Schalter in Form eines Relaisschalters oder eines Halbleiterschalters zur Trennung vom Netz aufweist. Im nicht erregten Zustand der Freischalteinrichtung befindet sich der wenigstens eine gesteuerte Schalter in einem geöffneten Zustand und leitet keine Netzspannung zu der Energieversorgungseinrichtung. Betätigt der Bediener eine Taste der Handbedienung, so wechselt die Freischalteinrichtung vom nicht erregten Zustand in den erregten Zustand, wobei der gesteuerte Schalter oder die Kontakte des gesteuerten Schalters in einen geschlossenen Zustand wechseln, wobei die Energieversorgungseinrichtung mit der elektrischen Energie aus dem Netz versorgt wird. Jetzt wechselt der Betriebszustand der Energieversorgungseinrichtung vom Betriebszustand Aus in den Betriebszustand Inbetriebnahme, im Anschluss dessen der eingangs erläuterte Zeitabschnitt durchlaufen wird, bis dass der Betriebszustand in den regulären Betrieb wechselt, wobei das Durchlaufen des Zeitabschnittes bis zu einigen Sekunden betragen kann und vom Bediener als störend empfunden wird.

Die DE 20 2008 006.878 beschreibt als weiterer Stand der Technik einen elektromotorischen Möbelantrieb. Am Eingang der Schalteinrichtung befindet sich ein Pufferspeicher. Die Schalteinrichtung wird immer über den Pufferspeicher vom Netz versorgt. Sie hat einen so geringen Energiebedarf, dass sie auch eventuell über den Prüfstrom einer Netzfreischalt-Einrichtung betrieben werden kann. Am Pufferspeicher wird eine Spannung über das Netz gehalten. Die EP0.393.280 beschreibt den "Schnellstart" eines Schaltnetzteils. Das primärseitige Steuerteil des Schaltnetzteil wird normalerweise über eine Rückkopplung der Sekundärspannung versorgt, wobei am Eingang des Steuerteils ein Pufferkondensator liegt. Zum Einschalten ("power-up") liegt diese Sekundärspannung aber noch nicht vor. Deshalb wird der Pufferkondensator beim Einschalten direkt vom Netz aufgeladen, wobei der Schalter hierfür wieder abgeschaltet wird, sobald die Sekundärspannung anliegt.

Der Erfindung liegt die Aufgabe zugrunde, einen elektromotorischen Möbelantrieb mit einer Energieversorgungseinrichtung der eingangs näher beschriebenen Art zu verbessern.

Die Lösung wird bei einem elektromotorischen Möbeiantrieb mit einer Energieversorgungseinrichtung mit den Merkmalen des Anspruchs 1 gelöst.

In vorteilhafter Weise ist parallel zur Energiequelle des Steuerbausteins eine weitere steuerbare Hilfsenergieversorgung geschaltet, welche den Steuerbaustein im Betriebszustand Inbetriebnahme zusätzlich mit elektrischer Energie versorgt.

Damit wird die Energiequelle zur Energieversorgung des Steuerbausteins im Betriebszustand der Inbetriebnahme zusätzlich mit Energie versorgt, so dass der Zeitabschnitt des Wechselns zwischen dem Betriebszustand Inbetriebnahme und dem Betriebszustand des regulären Betriebs sehr kurz ausgebildet ist, so dass der Wechsei vom Betriebszustand Aus in den regulären Betriebszustand für den Bediener nahezu übergangsfrei erscheint und praktisch unmerklich klein ist.

Durch die erfindungsgemäße Ausgestaltung der steuerbaren Hilfsenergieversorgung kann die Dauer des Betriebszustandes der Inbetriebnahme zwischen 100 und 500 ms betragen.

Die erfindungsgemäße steuerbare Hilfsenergieversorgung weist eine Hilfsschalteinrichtung auf, welche in einer Ausführung einen Transistorschalter aufweist.

Die Schaiteinrichtung versorgt die Energiequelle aus einem Versorgungspfad mit elektrischer Energie. Dieser Versorgungspfad ist in einer ersten Ausführungsform als netzgebundener Versorgungspfad ausgebildet, welcher mit der netzgebundenen Eingangsseite oder mit einem Betriebsstrompfad der Energieversorgungseinrichtung verbunden ist.

In einer weiteren Ausführungsform ist der Versorgungspfad als netzungebundener Versorgungspfad ausgebildet und weist eine Batterie, einen Akkumulator und / oder einen hochkapazitiven Speicherkondensator auf, wobei die Batterie, der Akkumulator und / oder der hochkapazitive Speicherkondensator an oder in der Energieversorgungseinrichtung fest oder austauschbar angeordnet ist.

Gemäß den vorgenannten Ausführungsformen steht ein erster Pfad der Hilfsschalteinrichtung, welcher als Eingangspfad ausgebildet ist, mit dem Versorgungspfad in Verbindung. Ein zweiter Pfad der Hilfsschalteinrichtung, welcher als Ausgangspfad ausgebildet ist, steht mit der Energiequelle des Steuerbausteins in Verbindung. Entlang des ersten und / oder des zweiten Pfades können elektrische Bauteile wie beispielsweise wenigstens ein elektrischer Widerstand angeordnet sein.

Die Hilfsschalteinrichtung weist einen Steuerpfad auf, welcher in unterschiedlicher Weise beschaltet ist, so dass die steuerbare Hilfsenergieversorgung auf unterschiedliche Weise aufgebaut ist.

Gemäß einer ersten Ausführungsform der steuerbaren Hilfsenergieversorgung ist diese als zeitgesteuerte Hilfsenergieversorgung ausgebildet. Dabei ist in der Ausführung als Transistorschalter der Steuerpfad des Transistorschalters mit zeitsteuerbaren Mitteln beschaltet. Die zeitsteuerbaren Mittel können zum Beispiel wenigstens einen elektrischen Kondensator und wenigstens einen elektrischen Widerstand aufweisen und ein RC-Glied bilden. Gemäß dieser Ausführungsform ändert der Transistorschalter seine Durchlässigkeit nach Ablauf einer vorbestimmten Zeit, welche durch die Auslegung des RC-Gliedes in bekannter Weise veränderbar ausgestaltbar ist.

In einer bevorzugten Ausführungsform ist der Transistorschalter als Transistorschalter mit einer Ausschaltverzögerung ausgebildet, und wobei die zeitgesteuerte Hilfsenergieversorgung zumindest im Betriebszustand der Inbetriebnahme aktiv geschaltet ist und die Energiequelle des Steuerbausteins mit elektrischer Energie versorgt. Nach Ablauf einer vorbestimmten Zeit, welche wie eingangs erwähnt durch Veränderung der zeitsteuernden Mittel einstellbar ist, wird die steuerbare Hilfsenergieversorgung abgeschaltet.

Gemäß einer zweiten Ausführungsform der steuerbaren Hilfsenergieversorgung ist diese als spannungsgesteuerte Hilfsenergieversorgung ausgebildet. Dabei ist der Steuerpfad der Hilfsschalteinrichtung mit rückkoppelbaren Mitteln beschaltet, wobei die rückkoppelbaren Mittel in Form einer Rückkopplung mit der Energiequelle oder / oder mit einem Betriebsstrompfad der Energieversorgungseinrichtung verbunden sind. Dabei erfolgt mittels der Rückkopplung eine Verbindung zum Steuerpfad der Hilfsschalteinrichtung derart, dass die Hilfsschalteinrichtung ihre Durchlässigkeit nach Erreichen eines vorbestimmten Potentials der Energiequelle und / oder des Betriebsstrompfades ändert.

Gemäß einer anderen Ausführungsform der Rückkopplung besteht eine direkte oder eine indirekte Verbindung zwischen dem Steuerpfad und einem sekundären Pfad, welcher mit einem spannungsführenden Pfad der ausgangsseitigen Kleinspannung der Energieversorgungseinrichtung verbunden ist. In einer Ausführungsform der indirekten Verbindung zwischen dem Steuerpfad und einem sekundären Pfad ist ein galvanisches Trennmittel, beispielsweise in Form eines Optokopplers, vorgesehen, wobei der Ausgangsanschluss des galvanischen Trennmittels mit dem Steuerpfad verbunden ist.

In einer bevorzugten Ausführungsform ist die Hilfsschalteinrichtung als unterbrechender Transistorschalter ausgebildet, wobei der Transistorschalter zumindest im Betriebszustand Inbetriebnahme solange durchlässig geschaltet ist, bis dass ein elektrisches Signal entlang der Rückkopplung den Transistorschalter abschaltet. Damit ist eine spannungsgesteuerte Hilfsenergieversorgung gebildet, welche nach Art einer ereignisbedingt schaltenden Hilfsenergieversorgung ausgebildet ist. Die Hilfsenergieversorgung ist zumindest im Betriebszustand der Inbetriebnahme aktiv und versorgt während dessen die Energiequelle des Steuerbausteins mit elektrischer Energie.

Ist die Rückkopplung gemäß einer Ausführungsform mit der Energiequelle des Steuerbausteins verbunden, so leiten die Mittel zur Rückkopplung ein elektrisches Signal auf den Steuerpfad des Transistorschalters, so dass bei Erreichen eines vorgegebenen Potentials der Energiequelle der Transistorschalter die gesteuerte Hilfsenergieversorgung abschaltet.

Ist die Rückkopplung gemäß einer anderen Ausführungsform mit einem Betriebsstrompfad der Energieversorgungseinrichtung verbunden, so leiten die Mittel zur Rückkopplung ein elektrisches Signal auf den Steuerpfad des Transistorschalters, so dass bei Erreichen eines vorgegebenen Potentials des Betriebsstrompfades der Transistorschalter die gesteuerte Hilfsenergieversorgung abschaltet.

In einer Ausführungsform ist die Energiequelle des Steuerbausteins als elektrisch speicherbare Energiequelle beispielsweise in Form eines Kondensators, einer Batterie oder eines Akkumulators ausgebildet. Im Falle eines Akkumulators kann diesem eine Ladeschaltung zugeordnet sein.

Gemäß den oben genannten Ausführungsformen startet die Versorgung der Energiequelle unmittelbar nach Einleitung des Betriebszustandes Inbetriebnahme und erfolgt innerhalb eines kurzen Zeitabschnitts, so dass als Folge dessen das Betriebspotential zum Betrieb des Steuerbausteins sehr rasch vorliegt. Dabei ist die Zeitdauer des Betriebszustandes der Inbetriebnahme sehr klein ausgebildet, wobei die Zeitdauer eine Spanne zum Beispiel von 100 bis 500 ms beträgt, gemäß einer bevorzugten Ausführungsform jedoch 200 ms beträgt. Innerhalb dieser Zeitspanne geht der Betriebszustand vom Betriebszustand Aus in den Betriebszustand des regulären Betriebs nahezu fließend über, so dass in vorteilhafter Weise der Bediener diesen Übergang nicht verspürt, zumindest aber nicht störend empfindet oder nahezu nicht wahrnimmt.

An dieser Stelle sei der eingangs beschriebene netzseitige Versorgungspfad näher erläutert. Der netzseitige Versorgungspfad steht im Betriebszustand des regulären Betriebs mit wenigstens einem der Netzanschlüsse des Energieversorgers wirksam in Verbindung. Die wirksame Verbindung erfolgt entweder direkt und unmittelbar, wobei zwischen dem Netzanschluss des Energieversorgers und dem netzgebundenen Versorgungspfad Schaltkontakte, Schalter, elektrische Sicherungen, etc. in Reihe geschaltet angeordnet sein können. Die wirksame Verbindung erfolgt ebenso, wenn auch mittelbar, wobei zwischen dem Netzanschluss des Energieversorgers und dem netzgebundenen Versorgungspfad elektrische Drosseln, elektrische Spulen, Dioden etc. in Reihe geschaltet angeordnet sein können.

In einer anderen Ausführungsform ist die Hilfsenergieversorgung durch einen Linearregler gebildet, welcher einen Eingangspfad aufweist, der mit einem netzgebundenen Versorgungspfad elektrisch leitend verbunden ist. Der Linearregler kann als Kompaktbaustein (z.B. IC) ausgeführt sein. In bevorzugter Weise ist er jedoch diskret und durch eine Mehrzahl Bauteile aufgebaut, wobei in einer erfindungsgemäßen Weise der diskrete Aufbau derart anpassbar gestaltet ist, dass der Linearregler im Ruhezustand des elektromotorischen Möbelantriebs einen Verluststromfluss von nur wenigen Mikroampere aufweist. Diese Hilfsenergieversorgung in Form eines Linearreglers wird ebenfalls auf die eingangs erwähnten Weisen und Verfahren gesteuert. Eine Ausführung der Steuerbarkeit sieht das eingangs erwähnt RC-Glied vor, welches mit einem Schalttransistor des Linearreglers verbunden ist und den Linearregler nach einer durch das RC-Glied vorbestimmten Zeit abschaltet. Eine andere Ausführung der Steuerbarkeit sieht rückkoppelbare Mittel in Form einer Rückkopplung mit der Energiequelle vor, welche mit einem Schalttransistor des Linearreglers elektrisch leitend verbunden ist und diesen abschaltet, nachdem der Steuerbaustein aktiv ist und die Energieversorgungseinrichtung sich im Betriebszustand des regulären Betriebs befindet.

Eine weitere Ausführungsform einer steuerbaren Hilfsenergieversorgung sieht ein galvanisches Trennmittel in Form eines Optokopplers vor, wobei der Schaltausgang des Optokopplers und ein damit in Reihe geschalteter elektrischer Widerstand mit einem netzgebundenen Versorgungspfad verbunden ist und die Hilfsenergieversorgung bildet. Gesteuert wird die Hilfsenergieversorgung durch den Eingang des Optokopplers, welcher mit einer Batterie, einem Akkumulator und/oder einem hochkapazitiven Speicherkondensator in einen Stromkreis eingebunden ist, der durch einen manuell betätigbaren Tastschalter einer Handbedienung geschlossen wird. In vorteilhafter Weise ist damit eine weitere Anordnung geschaffen, wobei eine galvanische Trennung zwischen der netzpotentialaufweisenden steuerbaren Hilfsenergieversorgung und dem steuernden Stromkreis des Handschalters erfolgt, wobei der steuernde Stromkreis durch den manuell betätigbaren Tastendruck des Handschalters betätigt, vorzugsweise geschlossen, wird.

Wie eingangs näher beschrieben kann der elektromotorische Möbelantrieb mit einer Freischalteinrichtung, einer so genannten Netzfreischaltung, erweitert sein. Einige der bekannten Freischalteinrichtungen weisen eine netzgebundene Klein-Hilfsspannungsquelle auf, welche unter anderem zum Betrieb der Spulen der relaisbildenden Netztrennschalter Verwendung finden. In einer besonders vorteilhaften Ausführungsform eines elektromotorischen Möbelantriebs mit einer Freischalteinrichtung weist die Klein-Hilfsspannungsquelle einen Übertrager oder einen Transformator mit einer Sekundärwicklung auf, welche im Betriebszustand des regulären Betriebs mit den Energieversorgungsanschlüssen des Steuerbausteins verbindbar ausgebildet ist. Dabei bildet die Sekundärwicklung der Klein-Hilfsspannungsquelle die Hilfsenergieversorgung, welche durch einen Transistorschalter bzw. durch einen Schalter mit schließender Eigenschaft steuerbar ausgebildet ist. Der Transistorschalter bzw. der Schalter wird von einem Netztrennschalter der Freischalteinrichtungen gesteuert oder ist durch ihn gebildet.

In Weiterführung dieser Ausführungsform steht ein manuell betätigbarer Kontakt der Handbedienung mit dem netzungebundenen Versorgungspfad in elektrischer Verbindung und bildet die Steuerung der Hilfsenergieversorgung, während die netzungebundene Spannungsversorgung des netzungebundenen Versorgungspfades durch eine Batterie, einen Akkumulator und/oder einen hochkapazitiven Speicherkondensator gebildet ist.

Eine andere Ausführung des netzungebundenen Versorgungspfades weist eine Hilfsenergieversorgung in Form einer photovoltaischen Spannungserzeugung in Form einer Solarzelle oder eines photovoltaischen Kopplers auf. Diese Hilfsenergieversorgung ist als steuerbare Hilfsenergieversorgung ausgebildet und steht dazu mit einem Leuchtmittel in Form einer Glühlampe oder einer Leuchtdiode (LED) in optischer Wirkverbindung. In vorteilhafter Weise ist damit eine Anordnung geschaffen, bei der eine galvanische Trennung zwischen der netzpotentialaufweisenden steuerbaren Hilfsenergieversorgung und dem steuernden Stromkreis des Leuchtmittels erfolgt, wobei der steuernde Stromkreis durch den manuell betätigbaren Tastendruck des Handschalters betätigt, vorzugsweise geschlossen, wird.

Eine andere Ausführungsform einer steuerbaren Hilfsenergieversorgung weist mindestens einen Taktgeber auf, welcher mit einem Hochfrequenzschaltbaustein oder einem weiteren Hochfrequenzschaltbaustein, der mit seinem Schaltausgang mit der Primärwicklung des Hochfrequenzübertragers oder mit einer weiteren Primärwicklung des Hochfrequenzübertragers der als Schaltnetzteil ausgebildeten Energieversorgungseinrichtung elektrisch leitend verbunden ist, in einem vorher festlegbaren Zeitabschnitt zusammenwirkt. Der Hochfrequenzschaltbaustein wird durch den Taktgeber mit hoher Schaltfrequenz angesteuert, wobei die Schaltfrequenz im Bereich von 50 kHz bis 90 kHz liegen kann. Der Taktgeber kann als frequenzbestimmende Einheit z.B. einen Schwingkreis aufweisen oder durch ihn gebildet sein. Weiterhin ist ein Steuereingang oder ein Spannungsversorgungseingang des Taktgebers von einem netzgebundenen Versorgungspfad oder von einer netzungebundenen Spannungsquelle mit elektrischer Energie versorgt. Beim Anlegen einer Spannung an den Steuereingang oder an den Spannungsversorgungseingang des Taktgebers erzeugt dieser das Hochfrequenzschaltsignal zur Einspeisung in den Hochfrequenzschaltbaustein, was beim Wechsel von dem Betriebszustand Aus in den Betriebszustand Inbetriebnahme in dem vorher festlegbaren Zeitabschnitt erfolgt. Sodann wird der Hochfrequenzübertrager mit getaktet schaltender Energie aus dem Netz versorgt, als Folge dessen wird in einer sekundärseitigen Versorgungswicklung des Hochfrequenzübertragers eine Spannung induziert. Da die Anschlüsse der sekundärseitigen Versorgungswicklung mit den Energieversorgungsanschlüssen des Steuerbausteins in elektrischer Verbindung stehen, wird anschließend der Steuerbaustein mit elektrischer Energie versorgt und kann die Energieversorgungseinrichtung im Betriebszustand des regulären Betriebs betreiben.

Da bei einem Wechsel vom Betriebszustand Aus in den Betriebszustand Inbetriebnahme die Spannungsversorgung des Steuerbausteins energielos ist, bildet der Taktgeber mit dem Hochfrequenzschaltbaustein oder mit einem weiteren Hochfrequenzschaltbaustein und mit der sekundärseitigen Versorgungswicklung die Hilfsenergieversorgung für den Steuerbaustein, indem die sekundärseitige Versorgungswicklung, oder eine zur sekundärseitigen Versorgungswicklung parallel angeordnete weitere sekundärseitige Versorgungswicklung, parallel zur Energiequelle des Stauerbausteins angeordnet ist. In einer gesonderten Ausführungsform bildet eine sekundärseitige Versorgungswicklung die Energiequelle des Steuerbausteins, wobei gemäß dieser Ausführung die Primärwicklung des Hochfrequenzübertragers als Hilfsenergieversorgung ausgebildet ist, welche zwar galvanisch getrennt, jedoch parallel zur als Energiequelle ausgebildeten sekundärseitigen Versorgungswicklung angeordnet ist.

Ferner steht der Taktgeber steuerungsseitig oder spannungsversorgungsseitig mit einem Zeitglied in Form einer Ausschaltverzögerung in Verbindung, so dass der Taktgeber nach Ablauf einer vorgegebenen Zeit abgeschaltet oder unwirksam geschaltet ist. Eine andere Ausführung sieht einen Schalter, beispielsweise einen Transistorschalter, vor, welcher mit einem eingangs näher beschriebenen Rückführ- bzw. Rückkopplungsmittel derart verbunden ist, dass der Taktgeber abgeschaltet oder unwirksam geschaltet wird, wenn der Betriebszustand der Energieversorgungseinrichtung den Betriebszustand des regulären Betriebs eingenommen hat. Da der Taktgeber oder der Hochfrequenzschaltbaustein steuerbar ausgebildet ist, ist somit eine steuerbare Hilfsenergieversorgung gebildet, welche parallel zu der Energieversorgung bzw. Energiequelle des Steuerbausteins angeordnet ist.

Weitere Kennzeichen und Merkmale ergeben sich aus der nachfolgenden Beschreibung eines bevorzugten Ausführungsbeispiels und sind Gegenstand weiterer Unteransprüche.

Anhand der beigefügten Zeichnungen wird die Erfindung noch näher erläutert. Es zeigen:
- Figur 1: eine beispielhafte und schematische Darstellung eines als Linearantrieb ausgebildeten Möbelantriebs mit einer Energieversorgungseinrichtung; und
- Figur 2: eine schematische Darstellung eines Zwischenstromkreises der Energieversorgungseinrichtung gemäß Figur 1.

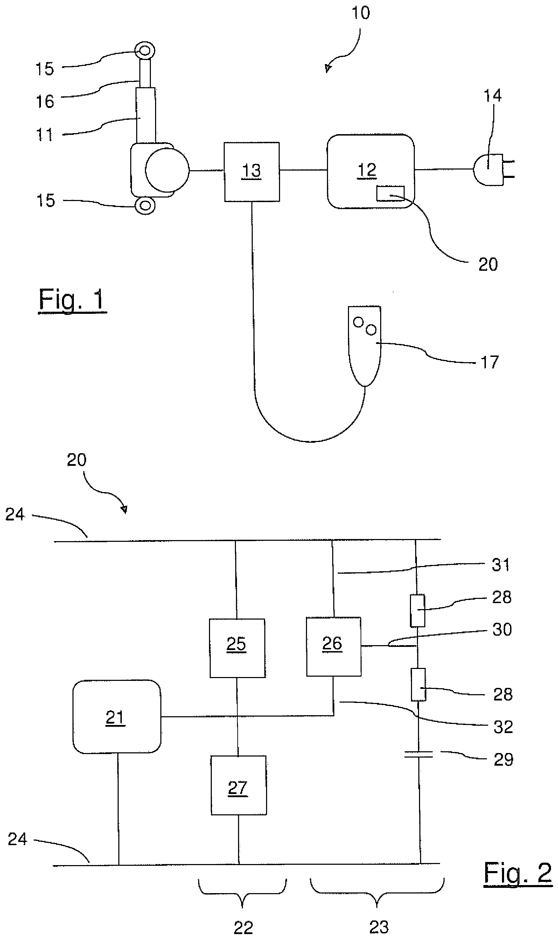

Die Figur 1 zeigt einen elektromotorischen Möbelantrieb mit einer Energieversorgungseinrichtung 10, wobei der elektromotorische Möbelantrieb 11 gemäß der Darstellung nach Figur 1 als sogenannter Linearantrieb 11 und die Energieversorgungseinrichtung 12 als Schaltnetzteil ausgebildet ist. Der Linearantrieb 11 weist je nach Drehrichtung eines nicht näher dargestellten Elektromotors ein ein- und ausfahrbares Hubrohr 16 auf, an dessen freies Ende ein Anschlussteil in Form eines Gabelkopfes 15 aufgesetzt ist. Ein weiteres Anschlussteil in Form eines weiteren Gabelkopfes 15 ist an dem Gehäuse des Möbelantriebs 11 befestigt. Das jeweilige Anschlussteil steht in nicht näher dargestellter Weise mit jeweils einem Möbelbauteil in Verbindung, so dass sich bei Betrieb des Elektromotors die an dem Linearantrieb 11 angeschlossenen Möbelbauteile relativ zueinander bewegen.

Die Energieversorgungseinrichtung 12 ist gemäß der Darstellung nach Figur 1 mit einem Netzstecker 14 verbunden, wobei in einer anderen und nicht näher dargestellten Ausführungsform der Netzstecker 14 an der Energieversorgungseinrichtung 12 angeordnet sein kann. Es sei noch erwähnt, dass die Energieversorgungseinrichtung 12 gemäß der Darstellung nach Figur 1 mit einem umhüllenden Gehäuse versehen ist, so dass der Netzstecker 14 an dem Gehäuse angesetzt oder angeformt sein kann. Der Netzstecker 14 leitet über eine schematisch dargestellte Leitung die eingangsseitige Netzspannung zu der Energieversorgungseinrichtung 12, welche als Schaltnetzteil ausgebildet ist und sekundärseitig eine Kleinspannung in Form einer Gleichspannung abgibt und diese zu einer Motorsteuerung 13 bzw. zu einem Energieverteiler 13 weiterleitet. Schaltnetzteile sind in deren Aufbau und Wirkungsweise bekannt, deren Details an dieser Stelle nicht näher erörtert werden sollen.

An der Motorsteuerung 13 bzw. an dem Energieverteiler 13 ist eine Handbedienung 17 in Form eines drahtgebundenen Handschalters 17 angeschlossen, wobei gemäß der Darstellung nach Figur 1 die Handbedienung 17 zwei Drucktaster aufweist. Gemäß einer anderen nicht näher dargestellten Ausführungsform ist die Handbedienung 17 mit einer drahtlosen Übertragungsstrecke versehen und sendet Funkwellen oder infrarote Lichtwellen zur Steuerung des wenigstens einen Elektromotors an die Motorsteuerung 13.

Gemäß der Darstellung nach Figur 1 steht in einer ersten Ausführungsform die Handbedienung 17 mit einer Motorsteuerung 13 in Verbindung, wobei die Motorsteuerung 13 als Relaissteuerung mit Relaisschaltern oder/und als Halbleiterschaltung mit Halbleiterschaltern ausgebildet ist. Die manuell betätigbaren Tastschalter der Handbedienung 17 schalten dabei den Steuerstrom der Relaisschalter bzw. der Halbleiterschalter, wobei die Leistungsschalter der Relaisschalter bzw. der Halbleiterschalter den hohen Motorstrom schalten.

Gemäß der Darstellung der Figur 1 steht in einer zweiten Ausführungsform die Handbedienung 17 mit dem Energieverteiler 13 in Verbindung, wobei der Energieverteiler 13 die elektrischen Leitungen der Energieversorgungseinrichtung 12 und die elektrischen Leitungen des Elektromotors des Linearantriebs 11 und die elektrischen Leitungen der manuell betätigbaren Tastschalter der Handbedienung 17 miteinander verbindet. Gemäß dieser Ausführungsform sind die Kontakte der manuell betätigbaren Tastschalter der Handbedienung 17 als Leistungsschalter ausgebildet und schalten bei Tatsendruck den hohen Motorstrom.

In einer weiterführenden, jedoch nicht näher dargestellten Ausführungsform, ist die Energieversorgungseinrichtung 12 in dem Gehäuse des Linearantriebs 11 eingesetzt oder daran angesetzt, wobei der Linearantrieb 11 in nicht näher dargestellter Weise nach Art eines Doppelantriebes aufgebaut sein kann, welcher wenigstens einen Motor, jedoch vorzugsweise zwei Motoren in einem gemeinsamen Gehäuse aufnimmt. Die Figur 1 zeigt weiterhin einen grob schematisch dargestellten Zwischenstromkreis 20, welcher in der Energieversorgungseinheit 12 angeordnet ist und nun anhand der Figur 2 näher beschrieben werden soll.

Die Figur 2 zeigt ein Blockschaltbild des Zwischenstromkreises 20, welcher einen Steuerbaustein 21 zur Steuerung der als Schaltnetzteil ausgebildeten Energieversorgungseinrichtung 12 aufweist. Parallel zu dem Steuerbaustein 21 ist eine Energiequelle 27 geschaltet, welche mit den Versorgungsanschlüssen des Steuerbausteins 21 verbunden ist, wobei die Energiequelle 27 in dieser beispielhaften Ausführungsform als elektrischer Kondensator ausgebildet ist. Im Betriebszustand Aus ist diese Energiequelle 27 elektrisch energielos. Die Energiequelle 27 ist mit einer Ladeschaltung 25 elektrisch in Serie geschaltet, wobei gemäß der beispielhaft dargestellten Ausführungsform die Ladeschaltung 25 und die Energiequelle 27 die Spannungsversorgung des Steuerbausteins 21 bildet. Die Spannungsversorgung 22 und / oder die Energiequelle 27 ist mit wenigstens einem Versorgungspfad 24 verbunden, welcher vorzugsweise als netzgebundener Versorgungspfad 24 mit einer Wechselspannung ausgebildet ist. In diesem Fall enthalten sowohl die Ladeschaltung 25 als auch die Hilfsschalteinrichtung jeweils einen Gleichrichter, z.B. eine Diode, was hier nicht dargestellt ist. Der Versorgungspfad 24 kann aber auch eine Zwischenkreisspannung, also eine Gleichspannung führen.

Die Figur 2 zeigt weiterhin eine in dem Zwischenstromkreis 20 angeordnete steuerbare Hilfsenergieversorgung 23, wobei die Hilfsenergieversorgung 23 eine Hilfsschalteinrichtung 26, hier einen Transistorschalter mit einer Beschaltung von zeitsteuerbaren Mitteln 28, 29 in Form eines RC-Gliedes aufweist. Sogenannte RC-Glieder sind bekannt und sind gemäß der Darstellung nach Figur 2 mit dem Steuerpfad 30 der Hilfsschalteinrichtung 26, d.h. des Transistorschalters, verbunden, wobei dieser nach Art einer Ausschaltverzögerung beschaltet ist. Im Weiteren wird die Hilfsschalteinrichtung 26 vereinfacht als Transistorschalter 26 bezeichnet.

Im Betriebszustand Aus sind die Speicher der Energiequelle 27 und des Kondensators 29 entleert. Wird die Energieversorgungseinrichtung 12 mit dem Netz verbunden, so führt wenigstens einer der Versorgungspfade 24 eine netzgebundene Wechselspannung oder gleichgerichtete elektrische Spannung, wobei die Ladeschaltung 25 die als Kondensator ausgebildete Energiequelle 27 gemäß dem Stand der Technik nur allmählich mit Energie auflädt. In erfindungsgemäßer Weise ist elektrisch parallel zu der Energiequelle 27 und / oder elektrisch parallel zu der Ladeschaltung 25 die steuerbare Hilfsenergieversorgung 23 mit einem beschalteten Transistorschalter 26 geschaltet. Der Transistorschalter 26 weist einen Eingangspfad 31 auf, welcher mit einem Versorgungspfad 24 elektrisch verbunden ist, und wobei zum Zeitpunkt der Beaufschlagung des Versorgungspfades 24 mit elektrischer Spannung der Transistorschalter 26 durchschaltet und die mit dem Ausgangspfad 32 verbundene Energiequelle 27 über seinen Ausgangspfad 32 mit elektrischer Energie versorgt. Somit steht in vorteilhafter Weise bereits schon kurz nach Beginn des Betriebszustandes Inbetriebnahme ein Spannungspotential zum Betrieb des Steuerbausteins 21 zur Verfügung, wobei die Zeitdauer vom Beginn des Betriebszustandes der Inbetriebnahme an bis zum Betriebszustand des regulären Betriebs etwa 200 ms beträgt. Mit anderen Worten überbrückt der Transistorschalter 26 zumindest im Betriebszustand Inbetriebnahme die Ladeschaltung 25 der Energiequelle 27. Die Reihenschaltung des RC-Gliedes besteht aus wenigstens einem elektrischen Widerstand 28 und wenigstens einem elektrischen Kondensator 28, wobei sich der Ladungszustand des Kondensators 29 während des Betriebszustandes Inbetriebnahme ändert. Der Kondensator 29 ist mit dem Steuerpfad des Transistorschalters 26 verbunden, wobei der Transistorschalter 26 seine Durchlässigkeit in Abhängigkeit des Ladungszustandes des elektrischen Kondensators 29 verändert, derart, dass bei Erreichen eines vorbestimmten Potentialwertes der Energiequelle 27 der Steuerbaustein 21 aktiv wird und als Folge dessen der Betriebszustand der Energieversorgungseinrichtung 12 in den Betriebszustand des regulären Betriebs wechselt.

Es ist auch möglich, dass anstelle des aus dem RC-Glied bestehenden Zeitgliedes eine Überwachung der Spannung der Energiequelle 27 erfolgen kann. Dabei wird die Durchlässigkeit des Transistorschalters 26 in Abhängigkeit von der Spannungshöhe der Energiequelle gesteuert. Das heißt, dass bei keiner oder geringer Spannung der Energiequelle 27 der Transistorschalter 26 die Energiequelle 27 so lange auflädt, bis ein vorbestimmter Spannungswert an der Energiequelle 27 erreicht ist. Dann schließt der Transistorschalter 26 wieder. Außerdem kann der Transistorschalter 26 bei dieser Spannungsüberwachung so beschaltet sein, dass diese Spannungsüberwachung nur im Betriebszustand Inbetriebnahme erfolgt und in den anderen Betriebszuständen unterbunden ist.

### Bezugszeichenliste

- 10: Elektromotorischer Möbelantrieb
- 11: Linearantrieb
- 12: Energieversorgungseinrichtung
- 13: Motorsteuerung / Energieverteiler
- 14: Netzstecker
- 15: Gabelkopf
- 16: Hubrohr
- 17: Handbedienung
- 20: Zwischenstromkreis
- 21: Steuerbaustein
- 22: Spannungsversorgung / Spannungsversorgung des Steuerbausteins
- 23: Steuerbare Hilfsenergieversorgung
- 24: Versorgungspfad / netzgebundener Versorgungspfad
- 25: Ladeschaltung der Energiequelle
- 26: Hilfsschalteinrichtung /Transistorschalter
- 27: Energiequelle
- 28: Widerstand
- 29: Kondensator
- 30: Steuerpfad
- 31: Eingangspfad
- 32: Ausgangspfad

## Patentansprüche

1. Elektromotorischer Möbelantrieb (10) mit einer Energieversorgungseinrichtung (12) zum Verstellen von beweglichen Möbelbauteilen relativ zueinander,
wobei der elektromotorische Möbelantrieb (10) wenigstens einen drehrichtungsumkehrbaren Elektromotor aufweist, wobei jedem Elektromotor ein Drehzahlreduziergetriebe nachgeschaltet ist und wobei jedem Drehzahlreduziergetriebe ein weiteres Getriebe nachgeschaltet ist,
und wobei die Energieversorgungseinrichtung (12) einen Netzanschluss aufweist, welcher mit dem Netz verbindbar ausgebildet ist, wobei die Energieversorgungseinrichtung (12) die netzseitige Eingangsspannung in eine ausgangsseitige Kleinspannung transformiert, und einen Trenntransformator oder einen Übertrager zur galvanischen Trennung zwischen der netzgebundenen Eingangsseite und der kleinspannungsgebenden Ausgangsseite zum Betrieb des elektromotorischen Möbelantriebs aufweist, wobei die Energieversorgungseinrichtung (12) nach Art eines Schaltnetzteils ausgebildet ist und einen Zwischenstromkreis (20) mit einem Steuerbaustein (21) zur Steuerung des Schaltnetzteils aufweist, und dem Steuerbaustein (21) eine Energiequelle (27) zugeordnet ist, welche mit einer netzgebundenen Ladeschaltung (25) versehen ist, wobei die Energieversorgungseinrichtung (12) einen Betriebszustand Aus bei Trennung vom Netz, einen Betriebszustand Inbetriebnahme nach Anschluss an das Netz bis zum regulären Betrieb und einen Betriebszustand Betrieb im regulären Betrieb aufweist, **dadurch gekennzeichnet, dass** zur Energiequelle (27) des Steuerbausteins (21) eine weitere steuerbare Hilfsenergieversorgung (23) geschaltet ist, welche den Steuerbaustein (21) im Betriebszustand Inbetriebnahme zusätzlich mit elektrischer Energie versorgt, wobei die weitere steuerbare Hilfsenergieversorgung (23) parallel zur Energiequelle (27) des Steuerbausteins (21) geschaltet ist, wobei die Energiequelle (27) mit wenigstens einem netzgebundenen Versorgungspfad (24) verbunden ist, und wobei die steuerbare Hilfsenergieversorgung (23) mit dem netzgebundenen Versorgungspfad (24) elektrisch verbunden ist.

2. Elektromotorischer Möbelantrieb (10) nach Anspruch 1, **dadurch gekennzeichnet, dass** die Energiequelle (27) zur Energieversorgung des Steuerbausteins (21) im Betriebszustand Inbetriebnahme den Steuerbaustein (21) zusätzlich mit Energie versorgt, so dass der Zeitabschnitt des Wechselns zwischen dem Betriebszustand Inbetriebnahme und dem Betriebszustand des regulären Betriebs sehr kurz, bevorzugt im Bereich von 100 bis 500 ms, besonders bevorzugt 200 ms, ausgebildet ist.

3. Elektromotorischer Möbelantrieb (10) nach einem oder mehreren der vorgenannten Ansprüche, **dadurch gekennzeichnet, dass** die steuerbare Hilfsenergieversorgung (23) eine Hilfsschalteinrichtung (26) aufweist, welche die Energiequelle (27) aus einem Versorgungspfad (24) mit elektrischer Energie versorgt.

4. Elektromotorischer Möbelantrieb (10) nach Anspruch 3, **dadurch gekennzeichnet, dass** die Hilfsschalteinrichtung (26) einen Transistorschalter (26) aufweist.

5. Elektromotorischer Möbelantrieb (10) nach einem der vorgenannten Ansprüche, **dadurch gekennzeichnet, dass** der Versorgungspfad (24) als netzgebundener Versorgungspfad (24) vor oder nach einer Gleichrichtung ausgebildet ist, welcher mit der netzgebundenen Eingangsseite oder mit einem Betriebsstrompfad der Energieversorgungseinrichtung (12) verbunden ist.

6. Elektromotorischer Möbelantrieb (10) nach einem der vorgenannten Ansprüche, **dadurch gekennzeichnet, dass** ein erster Pfad eines Transistorschalters der Hilfsschalteinrichtung (26), welcher als Eingangspfad (31) ausgebildet ist, mit dem Versorgungspfad in Verbindung steht

7. Elektromotorischer Möbelantrieb (10) nach Anspruch 6 **dadurch gekennzeichnet, dass** ein zweiter Pfad des Transistorschalters der Hilfsschalteinrichtung (26), welcher als Ausgangspfad (32) ausgebildet ist, mit der Energiequelle (27) des Steuerbausteins (21) in Verbindung steht.

8. Elektromotorischer Möbelantrieb (10) nach einem der vorgenannten Ansprüche, **dadurch gekennzeichnet, dass** die steuerbare Hilfsenergieversorgung (23) als zeitgesteuerte Hilfsenergieversorgung (23) ausgebildet ist.

9. Elektromotorischer Möbelantrieb (10) nach einem der Ansprüche 4, 6 oder 7, **dadurch gekennzeichnet, dass** ein Steuerpfad (30) des Transistorschalters der Hilfsschalteinrichtung (26) mit zeitsteuerbaren Mitteln (28, 29) beschaltet ist, wobei die zeitsteuerbaren Mittel (28, 29) wenigstens einen elektrischen Kondensator (29) und wenigstens einen elektrischen Widerstand (28) aufweisen und ein RC-Glied bilden.

10. Elektromotorischer Möbelantrieb (10) nach einem der Ansprüche 4, 6, 7 oder 9, **dadurch gekennzeichnet, dass** der Transistorschalter der Hilfsschalteinrichtung (26) als Transistorschalter mit einer Ausschaltverzögerung ausgebildet ist, und dass die zeitgesteuerte Hilfsenergieversorgung (23) zumindest im Betriebszustand der Inbetriebnahme aktiv geschaltet ist und die Energiequelle (27) des Steuerbausteins (21) mit elektrischer Energie versorgt.

11. Elektromotorischer Möbelantrieb (10) nach einem der vorgenannten Ansprüche, **dadurch gekennzeichnet, dass** die steuerbare Hilfsenergieversorgung (23) als spannungsgesteuerte Hilfsenergieversorgung ausgebildet ist.

12. Elektromotorischer Möbelantrieb (10) nach Anspruch 9 **dadurch gekennzeichnet, dass** der Steuerpfad (30) des Transistorschalters der Hilfsschalteinrichtung (26) mit rückkoppelbaren Mitteln beschaltet ist, wobei die rückkoppelbaren Mittel in Form einer Rückkopplung mit der Energiequelle (27) oder / oder mit einem Betriebsstrompfad der Energieversorgungseinrichtung (12) verbunden sind.

13. Elektromotorischer Möbelantrieb (10) nach einem der Ansprüche 4 ,6, 7, 9, 10 oder 12 **dadurch gekennzeichnet, dass** der Transistorschalter der Hilfsschalteinrichtung (26) seine Durchlässigkeit nach Erreichen eines vorbestimmten Potentials der Energiequelle (27) und / oder des Betriebsstrompfades ändert.

14. Elektromotorischer Möbelantrieb (10) nach einem der vorgenannten Ansprüche, **dadurch gekennzeichnet, dass** die Energiequelle (27) des Steuerbausteins (21) als elektrisch speicherbare Energiequelle (27) in Form eines Kondensators, einer Batterie oder eines Akkumulators ausgebildet ist.

15. Elektromotorischer Möbelantrieb (10) nach einem der vorgenannten Ansprüche, **dadurch gekennzeichnet, dass** die der Hilfsschalteinrichtung (26) zumindest im Betriebszustand Inbetriebnahme die Ladeschaltung (25) der Energiequelle (27) überbrückt.

16. Elektromotorischer Möbelantrieb (10) nach einem der vorgenannten Ansprüche, aufweisend weiterhin eine Freischalteinrichtung mit einer netzgebundenen Klein-Hilfsspannungsquelle mit einer Sekundärwicklung, welche im Betriebszustand des regulären Betriebs mit den Energieversorgungsanschlüssen des Steuerbausteins (21) verbindbar ausgebildet ist, **dadurch gekennzeichnet, dass** die Klein-Hilfsspannungsquelle der Freischalteinrichtung mit einem Netztrennschalter mit schließender Eigenschaft die steuerbare Hilfsenergieversorgung (23) bildet.

17. Elektromotorischer Möbelantrieb (10) nach Anspruch 3, aufweisend weiterhin eine Handbedienung (17), **dadurch gekennzeichnet, dass** ein manuell betätigbarer Kontakt der Handbedienung (17) mit dem Versorgungspfad (24) in elektrischer Verbindung steht und die Steuerung der Hilfsenergieversorgung (23) bildet, wobei der Versorgungspfad (24) mit einer netzungebundenen Spannungsversorgung, welche durch eine Batterie, einen Akkumulator und/oder einen hochkapazitiven Speicherkondensator gebildet ist, verbunden ist.

18. Elektromotorischer Möbelantrieb (10) nach Anspruch 3, aufweisend weiterhin eine Handbedienung (17), **dadurch gekennzeichnet, dass** die Hilfsenergieversorgung (23) in Form einer photovoltaischen Spannungserzeugung in Form einer Solarzelle oder eines photovoltaischen Kopplers als steuerbare Hilfsenergieversorgung ausgebildet ist und steht dazu mit einem Leuchtmittel in Form einer Glühlampe oder einer Leuchtdiode (LED) in optischer Wirkverbindung, wobei das Leuchtmittel durch einen manuell betätigbaren Kontakt der Handbedienung (17) schaltbar ist.

19. Elektromotorischer Möbelantrieb (10) nach Anspruch 1 oder 2, **dadurch gekennzeichnet, dass** die steuerbare Hilfsenergieversorgung (23) mindestens einen Taktgeber aufweist, welcher mit einem oder einem weiteren Hochfrequenzschaltbaustein, der mit seinem Schaltausgang mit der Primärwicklung des Hochfrequenzübertragers oder mit einer weiteren Primärwicklung des Hochfrequenzübertragers der als Schaltnetzteil ausgebildeten Energieversorgungseinrichtung (12) verbunden ist, beim Wechsel von dem Betriebszustand Aus in den Betriebszustand Inbetriebnahme in einem vorher festlegbaren Zeitabschnitt zusammenwirkt.

## Claims

1. Electromotive furniture drive (10) having a power supply device (12) for adjusting movable furniture components relative to one another, wherein the electromotive furniture drive (10) comprises at least one electric motor which can be reversed in the direction of rotation, wherein a speed-reducing gear is connected downstream of each electric motor and wherein a further gear is connected downstream of each speed-reducing gear, and wherein the power supply device (12) has a mains connection which is designed to be connectable to the mains, wherein the power supply device (12) transforms the mains-side input voltage into an output-side extra-low voltage, and having an isolating transformer or a transformer for electrical isolation between the mains-side input side and the output side supplying extra-low voltage for operating the electromotive furniture drive, wherein the power supply device (12) is designed in the manner of a switched-mode power supply unit and comprises an intermediate circuit (20) having a control module (21) for controlling the switched-mode power supply unit, and the control module (21) is assigned a power source (27) which is provided with a mains-bound charging circuit (25), wherein the power supply device (12) has an off operating state when disconnected from the mains, a start-up operating state after connection to the mains until regular operation, and an operating state for operation in regular operation, **characterized in that** a further controllable auxiliary power supply (23) is connected to the power source (27) of the control module (21), which additionally supplies the control module (21) with electrical power in the start-up operating state, wherein the further controllable auxiliary power supply (23) is connected in parallel with the power source (27) of the control module (21), wherein the power source (27) is connected to at least one mains-bound supply path (24), and wherein the controllable auxiliary power supply (23) is electrically connected to the mains-bound supply path (24).

2. Electromotive furniture drive (10) according to claim 1, **characterized in that** the power source (27) for supplying power to the control module (21) in the start-up operating state additionally supplies the control module (21) with power, so that the time interval of the change between the start-up operating state and the operating state of regular operation is designed to be very short, preferably in the range from 100 to 500 ms, particularly preferably 200 ms.

3. Electromotive furniture drive (10) according to one or more of the preceding claims, **characterized in that** the controllable auxiliary power supply (23) comprises an auxiliary switching device (26) which supplies electrical power to the power source (27) from a supply path (24).

4. Electromotive furniture drive (10) according to claim 3, **characterized in that** the auxiliary switching device (26) comprises a transistor switch (26).

5. Electromotive furniture drive (10) according to one of the preceding claims, **characterized in that** the supply path (24) is formed as a mains-bound supply path (24) before or after rectification, which is connected to the mains-bound input side or to an operating current path of the power supply device (12).

6. Electromotive furniture drive (10) according to one of the preceding claims, **characterized in that** a first path of a transistor switch of the auxiliary switching device (26), which is formed as an input path (31), is connected to the supply path.

7. Electromotive furniture drive (10) according to claim 6, **characterized in that** a second path of the transistor switch of the auxiliary switching device (26), which is formed as an output path (32), is connected to the power source (27) of the control module (21).

8. Electromotive furniture drive (10) according to one of the preceding claims, **characterized in that** the controllable auxiliary power supply (23) is designed as a time-controlled auxiliary power supply (23).

9. Electromotive furniture drive (10) according to one of claims 4, 6 or 7, **characterized in that** a control path (30) of the transistor switch of the auxiliary switching device (26) is interconnected with time-controllable means (28, 29), wherein the time-controllable means (28, 29) comprise at least one electric capacitor (29) and at least one electric resistor (28) and form an RC element.

10. Electromotive furniture drive (10) according to one of claims 4, 6, 7 or 9, **characterized in that** the transistor switch of the auxiliary switching device (26) is designed as a transistor switch with a switch-off delay, and **in that** the time-controlled auxiliary power supply (23) is actively switched at least in the start-up operating state and supplies the power source (27) of the control module (21) with electrical power.

11. Electromotive furniture drive (10) according to one of the preceding claims, **characterized in that** the controllable auxiliary power supply (23) is designed as a voltage-controlled auxiliary power supply.

12. Electromotive furniture drive (10) according to claim 9, **characterized in that** the control path (30) of the transistor switch of the auxiliary switching device (26) is interconnected with means that can be fed back, wherein the means that can be fed back are connected in the form of a feedback to the power source (27) and/or to an operating current path of the power supply device (12).

13. Electromotive furniture drive (10) according to one of the claims 4 ,6, 7, 9, 10 or 12, **characterized in that** the transistor switch of the auxiliary switching device (26) changes its permeability after reaching a predetermined potential of the power source (27) and/or the operating current path.

14. Electromotive furniture drive (10) according to one of the preceding claims, **characterized in that** the power source (27) of the control module (21) is designed as an electrically storable power source (27) in the form of a capacitor, a battery or an accumulator.

15. Electromotive furniture drive (10) according to one of the preceding claims, **characterized in that** the auxiliary switching device (26) bridges the charging circuit (25) of the power source (27) at least in the start-up operating state.

16. Electromotive furniture drive (10) according to one of the preceding claims, further comprising an isolating device having a mains-bound extra-low auxiliary voltage source having a secondary winding, which is designed to be connectable to the power supply terminals of the control module (21) in the operating state of regular operation, **characterized in that** the extra-low auxiliary voltage source of the isolating device forms the controllable auxiliary power supply (23) with a mains isolating switch with closing characteristic.

17. Electromotive furniture drive (10) according to claim 3, further comprising a manual control (17), **characterized in that** a manually operable contact of the manual control (17) is in electrical connection with the supply path (24) and forms the control of the auxiliary power supply (23), wherein the supply path (24) is connected to an off-grid voltage supply which is formed by a battery, an accumulator and/or a high-capacity storage capacitor.

18. Electromotive furniture drive (10) according to claim 3, further comprising a manual control (17), **characterized in that** the auxiliary power supply (23) in the form of a photovoltaic voltage generation in the form of a solar cell or a photovoltaic coupler is designed as a controllable auxiliary power supply and for this purpose is optically operatively connected to an illuminant in the form of an incandescent lamp or a light-emitting diode (LED), wherein the illuminant is switchable by a manually operable contact of the manual control (17).

19. Electromotive furniture drive (10) according to claim 1 or 2, **characterized in that** the controllable auxiliary power supply (23) has at least one clock generator which interacts with one or a further radio-frequency switching module, which is connected with its switching output to the primary winding of the radio-frequency transformer or to a further primary winding of the radio-frequency transformer of the power supply device (12) designed as a switched-mode power supply, when changing from the off operating state to the start-up operating state in a time interval which can be defined in advance.

## Revendications

1. Entraînement de meuble à moteur électrique (10) avec un dispositif d'alimentation en énergie (12) pour le déplacement de parties de meuble mobiles l'une par rapport à l'autre, lequel entraînement de meuble à moteur électrique (10) présente au moins un moteur électrique à sens de rotation inversable, chaque moteur étant suivi d'un engrenage réducteur et chaque engrenage réducteur étant suivi d'un autre engrenage, et le dispositif d'alimentation en énergie (12) présentant un raccordement au secteur qui est conçu pour pouvoir être branché sur le secteur, le dispositif d'alimentation en énergie (12) transformant la tension d'entrée du secteur en basse tension de sortie et comportant un transformateur sectionneur ou un translateur pour la séparation galvanique entre le côté d'entrée branché sur le secteur et le côté de sortie pour le fonctionnement de l'entraînement de meuble à moteur électrique, le dispositif d'alimentation en énergie (12) étant conçu comme un bloc secteur et comportant un circuit de courant intermédiaire (20) avec un composant de régulation (21) pour la régulation du bloc secteur et une source d'énergie (27) étant associée au composant de régulation (21) et munie d'un circuit de charge (25) raccordé au secteur, le dispositif d'alimentation en énergie (12) présentant un état de fonctionnement arrêté quand il est coupé du secteur, un état de fonctionnement de mise en service après le branchement sur le secteur et un état de fonctionnement en service en fonctionnement normal, **caractérisé en ce qu'**est raccordée à la source d'énergie (27) du composant de régulation (21) une autre alimentation en énergie auxiliaire pouvant être régulée (23) qui alimente le composant de régulation (21) en énergie électrique complémentaire dans l'état de fonctionnement de mise en service, l'autre alimentation en énergie électrique pouvant être régulée (23) étant montée en parallèle avec la source d'énergie (27) du composant de régulation (21), la source d'énergie (27) étant raccordée à au moins un trajet d'alimentation branché sur le réseau (24) et l'autre alimentation en énergie électrique pouvant être régulée (23) étant raccordée électriquement au trajet d'alimentation branché sur le réseau (24).

2. Entraînement de meuble à moteur électrique (10) selon la revendication 1, **caractérisé en ce que** la source d'énergie (27) pour l'alimentation en énergie du composant de régulation (21) dans l'état de fonctionnement de mise en service alimente en outre le composant de régulation (21) en énergie, de sorte que l'intervalle de temps de changement entre l'état de fonctionnement de mise en service et l'état de fonctionnement de fonctionnement normal est très court, de préférence de l'ordre de 100 à 500 ms, en particulier de 200 ms.

3. Entraînement de meuble à moteur électrique (10) selon une ou plusieurs des revendications précédentes, **caractérisé en ce que** l'autre alimentation en énergie électrique pouvant être régulée (23) présente un dispositif de commutation auxiliaire (26) qui alimente la source d'énergie (27) en énergie électrique à partir d'un trajet d'alimentation (24).

4. Entraînement de meuble à moteur électrique (10) selon la revendication 3, **caractérisé en ce que** le dispositif de commutation auxiliaire (26) présente un commutateur à transistors (26).

5. Entraînement de meuble à moteur électrique (10) selon l'une des revendications précédentes, **caractérisé en ce que** le trajet d'alimentation (24) est conçu comme un trajet d'alimentation (24) branché sur le réseau avant ou après un redresseur, qui est raccordé au côté d'entrée branché sur le réseau ou à un trajet de courant de fonctionnement du dispositif d'alimentation en énergie (12).

6. Entraînement de meuble à moteur électrique (10) selon l'une des revendications précédentes, **caractérisé en ce qu'**un premier trajet d'un commutateur à transistors du dispositif de commutation auxiliaire (26), conçu comme un trajet d'entrée (31), est raccordé au trajet d'alimentation.

7. Entraînement de meuble à moteur électrique (10) selon la revendication 6, **caractérisé en ce qu'**un deuxième trajet du commutateur à transistors du dispositif de commutation auxiliaire (26), conçu comme un trajet de sortie (32), est raccordé à la source d'énergie (27) du composant de régulation (21).

8. Entraînement de meuble à moteur électrique (10) selon l'une des revendications précédentes, **caractérisé en ce que** l'autre alimentation en énergie électrique pouvant être régulée (23) est conçue comme une alimentation en énergie auxiliaire asservie au temps (23).

9. Entraînement de meuble à moteur électrique (10) selon l'une des revendications 4, 6 ou 7, **caractérisé en ce qu'**un trajet de régulation (30) du commutateur à transistors du dispositif de commutation auxiliaire (26) est monté avec des moyens pouvant être asservis au temps (28,29), lesquels moyens pouvant être asservis au temps (28, 29) comportent au moins un condensateur électrique (29) et au moins une résistance électrique (28) et forment un circuit RC.

10. Entraînement de meuble à moteur électrique (10) selon l'une des revendications 4, 6, 7 ou 9, **caractérisé en ce que** le commutateur à transistors du dispositif de commutation auxiliaire (26) est conçu comme un commutateur à transistors à arrêt différé et **en ce que** l'alimentation en énergie auxiliaire asservie au temps (23) est activée au moins dans l'état de fonctionnement de mise en service et la source d'énergie (27) du composant de régulation (21) est alimentée en énergie électrique.

11. Entraînement de meuble à moteur électrique (10) selon l'une des revendications précédentes, **caractérisé en ce que** l'autre alimentation en énergie électrique pouvant être régulée (23) est conçue comme une l'alimentation en énergie auxiliaire asservie à la tension.

12. Entraînement de meuble à moteur électrique (10) selon la revendication 9, **caractérisé en ce que** le trajet de commande (30) du commutateur à transistors du dispositif de commutation auxiliaire (26) est monté avec des moyens à rétroaction, lesquels moyens à rétroaction sont reliés à la source d'énergie (27) et/ou à un trajet de courant de fonctionnement du dispositif d'alimentation en énergie (12) sous la forme d'un couplage à rétroaction.

13. Entraînement de meuble à moteur électrique (10) selon l'une des revendications 4, 6, 7, 9, 10 ou 12, **caractérisé en ce que** le commutateur à transistors du dispositif de commutation auxiliaire (26) change d'état passant quand un potentiel prédéterminé de la source d'énergie (27) et/ou du trajet de courant de fonctionnement est atteint.

14. Entraînement de meuble à moteur électrique (10) selon l'une des revendications précédentes, **caractérisé en ce que** la source d'énergie (27) du composant de régulation (21) est conçue comme une source d'énergie (27) à accumulation électrique prenant la forme d'un condensateur, d'une batterie ou d'un accumulateur.

15. Entraînement de meuble à moteur électrique (10) selon l'une des revendications précédentes, **caractérisé en ce que** le dispositif de commutation auxiliaire (26) shunte le circuit de charge (25) de la source d'énergie (27) au moins dans l'état de fonctionnement de mise en service.

16. Entraînement de meuble à moteur électrique (10) selon l'une des revendications précédentes, présentant en outre un dispositif de déconnexion avec une source de basse tension auxiliaire branchée sur le réseau et munie d'un enroulement secondaire, qui peut être connectée dans l'état de fonctionnement normal aux connexions d'alimentation en énergie du composant de régulation (21), **caractérisé en ce que** la source de basse tension auxiliaire du dispositif de déconnexion forme avec un autre sectionneur secteur à pouvoir de fermeture l'autre alimentation en énergie électrique pouvant être régulée (23).

17. Entraînement de meuble à moteur électrique (10) selon la revendication 3, présentant en outre une commande manuelle (17), **caractérisé en ce qu'**un contact pouvant être actionné manuellement de la commande manuelle (17) est en liaison électrique avec le trajet d'alimentation (24) et forme la commande de l'alimentation en énergie auxiliaire (23), le trajet d'alimentation (24) étant raccordé à une alimentation en tension branchée sur le secteur qui est formée par une batterie, un accumulateur et/ou un condensateur d'accumulation de grande capacité.

18. Entraînement de meuble à moteur électrique (10) selon la revendication 3, comprenant en outre une commande manuelle (17), **caractérisé en ce que** l'alimentation en énergie auxiliaire (23) est conçue comme un générateur de tension photovoltaïque prenant la forme d'une cellule solaire ou d'un coupleur photovoltaïque pour servir d'autre alimentation en énergie électrique pouvant être régulée et est en liaison active optique avec une lampe formée par une lampe à incandescence ou une diode électroluminescente (LED), laquelle lampe peut être allumée et éteinte par un contact pouvant être actionné manuellement de la commande manuelle (17).

19. Entraînement de meuble à moteur électrique (10) selon la revendication 1 ou 2, **caractérisé en ce que** l'autre alimentation en énergie électrique pouvant être régulée (23) comprend au moins un générateur d'impulsions qui coopère avec un composant de commutation à haute fréquence ou un autre dont la sortie de commutation est reliée à l'enroulement primaire du translateur à haute fréquence du dispositif d'alimentation en énergie (12) conçu comme un bloc secteur lors du passage de l'état de fonctionnement d'arrêt à l'état de fonctionnement de mise en service dans une tranche de temps qui peut être prédéterminée.
